(19) Europäisches Patentamt
European Patent Office
Office européen des brevets

(11) **EP 1 759 744 A1**

(12) **EUROPEAN PATENT APPLICATION**
published in accordance with Art. 158(3) EPC

(43) Date of publication:
**07.03.2007 Bulletin 2007/10**

(51) Int Cl.:
***A63F 13/00*** (2006.01)

(21) Application number: **05720502.3**

(22) Date of filing: **10.03.2005**

(86) International application number:
**PCT/JP2005/004231**

(87) International publication number:
**WO 2005/107904 (17.11.2005 Gazette 2005/46)**

(84) Designated Contracting States:
**DE ES FR GB IT**

(30) Priority: **10.05.2004 JP 2004140333**

(71) Applicant: **SEGA CORPORATION**
**Tokyo 144-8531 (JP)**

(72) Inventors:
• **SHIMIZU, Toru,**
**c/o SEGA CORPORATION**
**Tokyo 1448531 (JP)**

• **HIRABAYASHI, Takao,**
**c/o SEGA CORPORATION**
**Tokyo 1448531 (JP)**

(74) Representative: **Brown, Kenneth Richard et al**
**R.G.C. Jenkins & Co.**
**26 Caxton Street**
**London SW1H 0RJ (GB)**

(54) **ELECTRONIC GAME MACHINE, DATA PROCESSING METHOD IN ELECTRONIC GAME MACHINE AND ITS PROGRAM AND STORAGE MEDIUM**

(57)     The following processing steps are performed: 1) processing for determining the behavior of a player character and specifying a first coefficient relating to that behavior; 2) processing for determining the current position of the player character in a virtual space and specifying a second coefficient relating to the environment defined at that position; 3) processing for specifying the conspicuousness of the player character on the basis of the first and second coefficients; and 4) processing for judging whether or not an enemy character has detected the player character, on the basis of the conspicuousness.

FIG.5

EP 1 759 744 A1

## Description

TECHNICAL FIELD

The present invention relates to an electronic game machine, a data processing method for an electronic game machine, and a program or the like, for causing a computer to implement this method, and in particular, it relates to an electronic game machine or the like, suitable for achieving a game scenario, known as a spy game, in which a player character operated by a game player carries out a designated mission, or the like, while seeking as far as possible to remain undetected by objects defined as opponents in the game application program.

BACKGROUND

In this type of a game application program for an electronic game machine, the game player operates the game program while taking care at all times of the positional relationship between his or her player character and enemy characters (opponents) defined as enemies which form opponents in the game.

It is known in the art that a radar function is used in a game program in order to provide the position of an enemy character for the game player, in a readily comprehensible way. For example, Japanese Patent Application Publication No. 10-263205 discloses a game machine which shows a video image of a soccer game when seen from a viewpoint defined in a virtual space, in the center of the screen, as well as displaying a small screen for radar separately from this background screen. The viewpoint moves to the rear side of a player character who is moving towards the ball, and the central image from this viewpoint is displayed in a large size over the whole screen. In this case, the game player cannot really find how other team mates and opponent players are positioned relatively around the player character that he or she is operating.

Therefore, a radar image is composed which indicates a positional relationship between team mates and opponent players relative to the player character located in the center of the radar image, and thus the radar image is displayed on the monitor, separately from the main screen.

Reference Patent 1 : Japanese Patent Laid-open No. (H) 10-263205

SUMMARY

In a conventional electronic game machine, a game player is not able in any way to find how easily his or her player character can be detected by an opponent's character, and the game player feels a sense of unease. If the player character has been detected by an enemy character, then the player may have believed that he or she was operating his or her character correctly and will want to know why his or her character was detected by the enemy. The decision on whether or not the player character has been detected by the enemy character is determined by the game program on the basis of a plurality of factors, and in principle, it is difficult to communicate these accurately to the user in a readily comprehensible fashion.

If the player could be informed in a simple fashion with regard to how easily his or her player character can be detected by an enemy character, in any circumstances, then the sense of unease felt by the player could be removed, and furthermore the player could operate the player character so that the player character is not detected. Therefore, it would be possible to improve the usability of the game.

Therefore, it is an object of the present invention to provide electronic game technology comprising data processing means for communicating to the game player, in a readily comprehensible fashion, whether or not the object that is being operated by the player is in a state where it is easily detectable by objects forming opponents in an application game program.

In order to achieve the aforementioned object, the present invention provides: image processing for a game in a game machine composed in such a manner that, by means of a CPU executing a game program, a game is implemented by controlling the behavior and positions in a virtual space of a player character which moves in the virtual space on the basis of operating signals from operating means which is operated by a game player, and other enemy characters which move in the virtual space under the control of the CPU, images of the game being displayed on display means; comprising the steps of: 1) determining the behavior of the player character and specifying a first coefficient relating to the behavior; 2) determining the current position of the player character in the virtual space and specifying a second coefficient relating to the environment defined at that position; 3) specifying the conspicuousness of the player character on the basis of the first and second coefficients; and 4) judging whether or not the enemy character has detected the player character, on the basis of the conspicuousness.

According to the present invention, since an indicator relating to the conspicuousness of the player character with respect to an opponent character is created and supplied to the game player, then it is possible reliably to communicate to the game player whether or not the object operated by the game player is in a state where it can be detected readily by an object forming an opponent in the game application program.

DESCRIPTION OF DRAWINGS

FIG. 1 is a block diagram of an electronic game machine according to the present invention;
FIG. 2 shows one scene of a video image displayed on a monitor;
FIG. 3 is one example of a display image of an indicator relating to conspicuousness;
FIG. 4 is a principle diagram for defining environmental coefficients in a virtual space;
FIG. 5 is an operational flowchart of a data processing method according to the present invention; and
FIG. 6 shows a display example of an indicator relating to conspicuousness.

DETAILED DESCRIPTION

In an embodiment of the invention described below, a game player is able to control an electronic game by executing a game application program in a game machine having data processing functions (computer functions), and in general terms, the object of the game application is that a ninja steals into an enemy building, without being detected by the enemy.

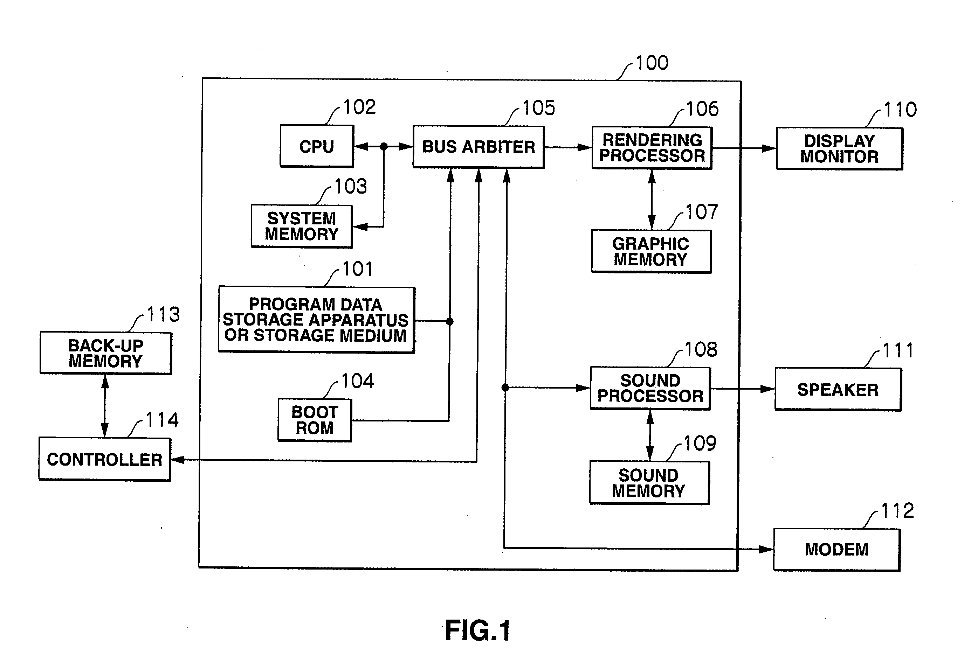

Firstly, a configuration of a game machine will be described. Fig. 1 is a block diagram of an electronic game machine according to the present invention. The game machine 100 comprises: a program data storage apparatus or storage medium (including an optical disk or optical disk drive) 101 in which a game program or data (including video / sound data) are stored; a CPU 102, which executes a game program, controls the whole system, and makes coordinate calculations for image display, and the like; a system memory 103 in which programs and data required for processing by the CPU 102 are stored; a BOOT ROM 104 in which programs and data required when starting up the game machine 100 are stored; and a bus arbiter 105 which controls the flow of programs and data between the respective blocks of the game machine 100 and externally connected equipment. These respective modules are connected respectively to a bus.

A rendering processor 106 is connected to the bus, and video (movie) data read out from the program data storage apparatus or the storage medium 101, and images that are generated in accordance with the operations performed by the game player and the progress of the game, are displayed on a display monitor 110 by the rendering processor 106. Graphics data, and the like, required by the rendering processor 106 in order to generate images is stored in a graphics memory (frame buffer) 107.

A sound processor 108 is connected to the bus, and music data read out from the program data storage apparatus or the storage medium 101, and sound effects and voice sounds that are generated in accordance with the operations performed by the game player and the progress of the game, are output by the sound processor 108 via speakers 111. The sound data, and the like, required by the sound processor 108 in order to generate sound effects or voice sounds is stored in a sound memory 109.

A modem 112 is connected to the game machine 100, thereby allowing the game machine 100 to communicate with other game machines 100 and network servers, via a telephone circuit (not illustrated). The game machine 100 is also connected to a back-up memory 113 (including a disk storage medium or storage apparatus) which records information on the intermediate progress of the game and program data that is input or output via the modem, and a controller 114 which inputs, to the game machine 100, information for controlling the game machine 100 and externally connected equipment in accordance with the operations performed by the user. An image calculation processing unit is constituted by the CPU 102 and the rendering processor 106. The units which have been described as constituent parts of the game machine may be distributed to other game machines or servers. An electronic game system, in other words, an electronic game machine relating to the present invention, may also be realized by means of a player's game machine terminal and a server.

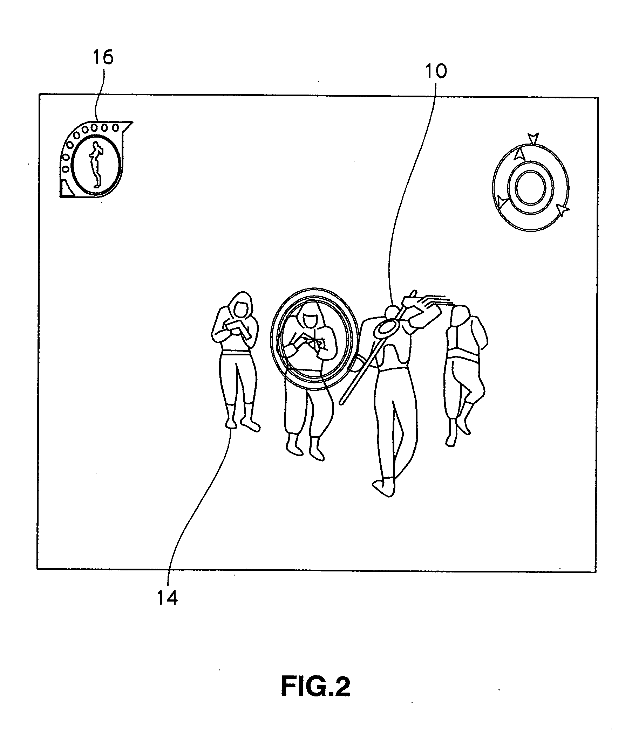

FIG. 2 shows a snapshot of a video image displayed on the monitor, which relates to a scenario where a player character 10 controlled by the game player is approaching an enemy character (opponent) 12 while taking maximum care not to be noticed, in order to kill the enemy character. At the top left of FIG. 2 displayed is a conspicuousness screen (indicator) 16 according to the present invention. This screen is divided off from the central image of the game.

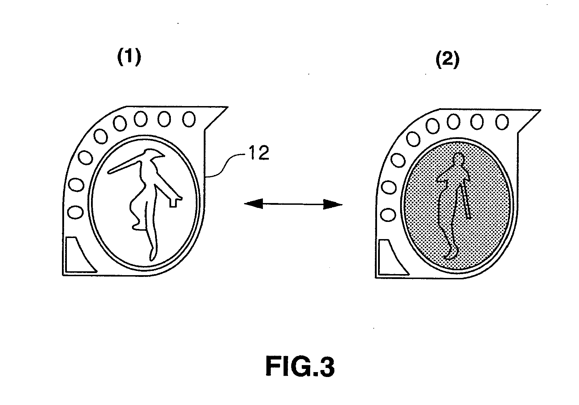

FIG. 3 shows this screen. Numeral 12 denotes a symbol of the player character, and the behavior of this symbol corresponds substantially to the actions (moving image) of the player character. (1) of FIG. 3 shows an indicator image in a case where a conspicuous state of the player character with respect to the opponents characters is being communicated to the game player, and (2) shows an indicator image in a case where, conversely, a concealed and inconspicuous state is being communicated to the game player. The displayed brightness of the background of the conspicuousness screen is used to indicate whether or not the player character is conspicuous to the opponents. In other words, if the player character is conspicuous, then the brightness of the background color is raised, whereas if, conversely, the player character is inconspicuous, then the brightness of the background color is lowered.

The principles used to determine the parameter relating to conspicuousness will be described. This parameter is obtained by multiplying together a coefficient relating to the behavior of the player character (first coefficient), a coefficient relating to the environment in which the player character is located (second coefficient), and a coefficient relating to enemy characters (third coefficient).

Firstly, the coefficient relating to the behavior of the player character will be described. Essentially, the behavior of the player character includes conspicuous behavior and inconspicuous behavior. From experience, it is known that if the character is situated in a high position with respect to the ground surface, then the character is more conspicuous than when it is in a low position. Furthermore, if the speed of movement of the character is fast, then it will be more conspicuous than when it is halted or has a slow speed of movement. Therefore, a coefficient is defined for each motion of the character, thereby creating an index of the character's conspicuousness. For example, the following coefficients are defined, respectively, for a case (A) where the character is standing and stationary, a case (B) where it is standing and walking, and a case (C) where it is performing a hiding action, such as crouching. In the case of (A), the conspicuousness with respect to an enemy character is normal and therefore a coefficient of 400 is defined, for example; in the case of (B), the character is conspicuous with respect to an enemy character and therefore a coefficient of 800 is defined. In the case of (C), the coefficient is defined as 0.

The respective actions of the player character are defined as character motion data in the game program. Previously determined coefficients are defined for respective character motions. These coefficients may be calculated by determining the height of the player character with respect to the ground surface, for example, the positions of the head and waist polygons of the player character, determining the movement speed of the character, and then calculating a coefficient on the basis of the determined values, using a prescribed characteristics formula.

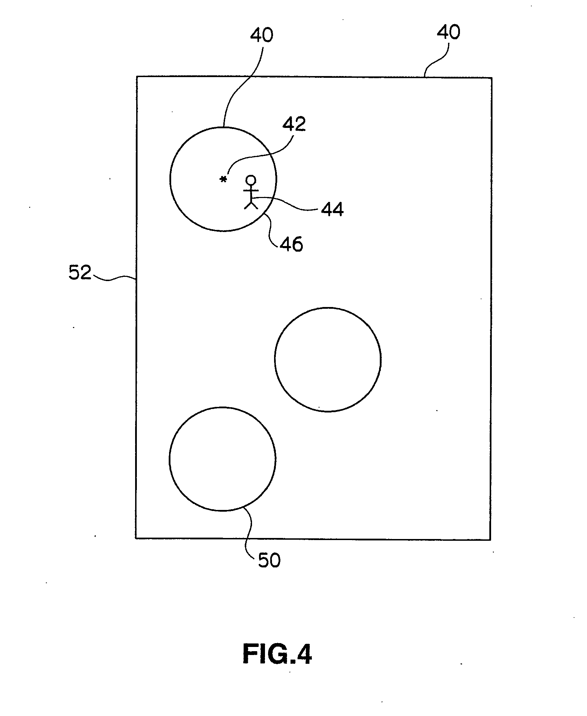

Next, the coefficient relating to the environment (second coefficient) will be described. In the three-dimensional space in which the player character moves, it is possible to define places where the character is conspicuous, places where the character is inconspicuous, and regions in between these two. A place where the character is conspicuous is, for example, a coordinate position in the virtual three-dimensional space which is defined by the game program to be a bright place (the interior of an illuminated room), or a flat place where there are no obstacles. A place where the character is inconspicuous is, for example, a position in the shadow of an object, or an outdoor position at night. In the game program, spheres (regions) 40 as shown in FIG. 4 are defined respectively for these two types of regions, and a prescribed coefficient is determined on the basis of the position occupied by a character within a sphere. In the case of a sphere located in a place where the character is conspicuous, a prescribed coefficient is defined at the center 42 of the sphere, and the coefficient value is reduced progressively toward the outermost edge 46 of the sphere. For example, if the player character 42 is situated at the center of the sphere, then a value of "1" is set as an environment coefficient for the player character, whereas if the player character is situated at the outermost edge position of the sphere, then the environmental coefficient is set to "0.5". In other words, the distance between the player character and the center of the sphere is calculated, and the environmental coefficient is reduced accordingly, as this distance becomes larger.

On the other hand, in the case of a sphere 50 which makes the player character inconspicuous, a value of "0", for example, is set as the environmental coefficient in the center of the sphere, and an environmental coefficient of "0.5" is defined at the outermost edge of the sphere. In other words, the environmental coefficient increases as the player character moves away from the center of the sphere. In the region 52 between these spheres, a normal value of "0.5" is set. The larger the value of this coefficient, the greater the "conspicuousness" of the player character. The game manufacturer is able to decide appropriately what types of spheres to place at what positions in the game space 40 defined by the game, and what coefficients to apply to these spheres. The coordinate positions of these spheres (regions) are set and stored in advance in the game program.

The conspicuousness of the player character is calculated by deriving a player-side coefficient by multiplying the coefficient relating to the behavior of the player character by the environment coefficient, and then multiplying this player-side coefficient by an enemy character-side coefficient (third coefficient). The enemy character-side coefficient correlates to the level of alertness of the enemy character, the individual capabilities of the enemy character (for example, its power of vision), and the distance between an enemy character and the player character.

The closer the distance between the enemy character and the player character, the greater the level of alertness of the enemy character, and/or the higher the individual capabilities of the enemy character, then the greater the conspicuousness of the player character with respect to the enemy character. The level of alertness means the extent to which an enemy character is looking out for the player character, and it may indicate, for example, that the enemy character is off its guard, or is suspicious of something, or is convinced that the player character is present, or is in a state of attacking the player character. The nearer the state of the enemy character to the latter state in this range, the higher the value of the alertness coefficient. By way of setting flags corresponding to the respective alertness levels, and defining a coefficient in accordance with the flags, it is possible to reflect the alertness level in the conspicuousness calculation. The game manufacturer should decide appropriately what level of alertness the enemy characters will have according to the progress of the game.

Furthermore, with regard to the individual capabilities of the enemy characters, these are decided appropriately by the game manufacturer, and a prescribed coefficient should be set in accordance with the level of individual capabilities thus defined. If the player character enters into the field of vision of an enemy character, then by increasing the coefficient relating to the individual capabilities of the enemy character, it is possible to ensure that the direction of the field of vision of the enemy character is reflected in the conspicuousness calculation. This is decided appropriately by the manufacturer of the game program, and a prescribed coefficient should be defined accordingly.

One example of a calculation formula showing the relationship between the coefficients is described below.

Conspicuousness = (1 − (distance (t) / coefficient (α) relating to power of vision)) x coefficient (β) relating to alertness x coefficient (γ) relating to behavior of player character x environmental coefficient (Δ)

The respective coefficients, and formulas for determining the coefficients, are stored in advance in the game application program, and the CPU 102 determines the coefficients described above on the basis of the input data from the game application program and the controller, and data determined previously during the execution of the game program, and the like, and it derives the conspicuousness by performing the calculation described above. Assuming that t = 250, α = 250, β = 0.75, γ = 400 and Δ = 0.75, the conspicuousness will be 45, and since this is less than a prescribed value (100), then the player character is defined as being inconspicuous. Supposing that, as the player character approaches an enemy character, t becomes t = 80, Δ becomes Δ = 0.5, and the other coefficients remain unchanged, then the conspicuousness becomes 102, and hence the player character is defined as being conspicuous to the enemy character.

On the basis of this conspicuousness value, a screen (indicator) as in FIG. 3 which shows the conspicuousness quantitatively to the game player is created and displayed on the monitor. Since the indicator is displayed on a continuous scale of brightness between bright and dark in accordance with the conspicuousness, then the game player is able to gauge a measure of how conspicuous his or her player character is, from the brightness or darkness of the indicator.

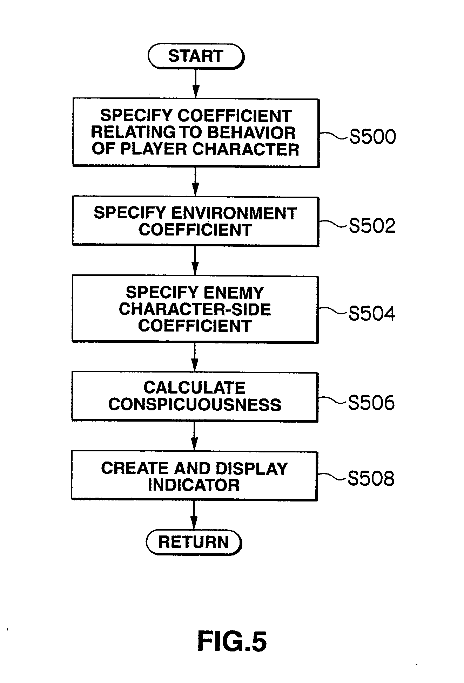

Next, the operation of the game machine will be described with reference to a flowchart that is executed by the CPU. The CPU 102 controls the overall execution of the game, and FIG. 5 shows a flowchart of this control operation. When a game is started, the CPU 102 decides a coefficient corresponding to the behavior of the player character from the motion of the player character (S500). Thereupon, it determines the current position of the player character and specifies an environmental coefficient as described above (S502). Thereupon, the positions of all of the enemy characters are determined, and for each of the plurality of enemy characters, a coefficient relating to the individual capabilities of the enemy character is specified (S504). The conspicuousness is then calculated on the basis of the characteristics formula described above (S506). If there are a plurality of enemy characters, then the coefficients relating to the enemy characters should be averaged. The result of the conspicuousness calculation is stored in a prescribed region of the system memory. The CPU 102 then specifies the brightness of the indicator described above, on the basis of this conspicuousness value. The CPU determines the action of the player character, applies this action to the symbol of the player character inside the indicator, and then displays the symbol (S508).

When the game player starts the game and operates the player character, then as the player character moves about the game field, the brightness of the indicator changes continuously between bright and dark. This changing brightness has the beneficial effect of allowing the game player to know at all times the conspicuousness of his or her player character. If a player character enters within the field of vision of an enemy character, then the actions of the enemy character are decided by the game program in accordance with the calculated conspicuousness. If the conspicuousness is high, then the enemy character launches an attack on the player character, in accordance with the game program, but if the conspicuous is low, then the enemy character does not react at all.

In the description given above, the characteristics (capabilities) of the enemy characters are reflected in the conspicuousness value, but it is also possible not to incorporate these characteristics, and to derive the conspicuousness by multiplying together the coefficient relating to the player character's behavior and the environment coefficient, only. Moreover, it is also possible for the mode of behavior of the enemy characters to be decided in accordance with the calculated conspicuousness value.

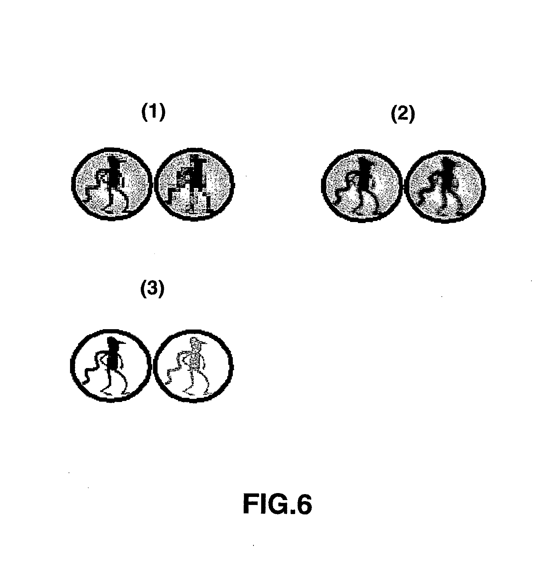

Furthermore, there are no particular restrictions on the processing for changing the display mode of the indicator image, and it is possible to change the color, brightness, transparency, or pixel size (mosaic processing) of the indicator image, or to apply an image effect corresponding to the conspicuousness value determined on the basis of the aforementioned coefficients (an effect such as defocusing, changing transparency, changing the brightness or color, mosaic processing) to at least one of the character symbol and the background displayed on the indicator image. (1) in FIG. 6 shows an indicator image after it has been processed with a mosaic pattern, (2) shows an image after defocus processing, and (3) shows an image after semi-transparent processing.

Moreover, as regards the processing for determining a coefficient corresponding to the behavior of the player character on the basis of the motion of the player character, besides defining coefficients in advance for respective motion data (namely, providing a defined data table), it is also possible to calculate a coefficient from the character's attitude, the height of the head and waist polygons from the ground surface, and the speed of movement, or to combine both of these methods (namely, rather than defining coefficients in advance for all motions, depending on the circumstances, a value is calculated from the position of the head polygon of the character model, and the coefficient is recalculated by adding this calculated value to a defined value), or the like.

Furthermore, since an enemy having a high level of alertness will have a broader range of vision (a greater distance and width of the field of the vision) than an enemy having a low level of alertness, then if the conspicuousness is derived by averaging the values after calculating a conspicuousness value in respect of each enemy, advantages are obtained in that: (1) even if the behavior of the player and the environment are the same, when there is an enemy having a high level of alertness, then this is reflected and the average conspicuousness value rises, making the player character more liable to be detected by other enemies having a lower level of alertness; and (2) the range of vision of the enemies can be changed in accordance with the environmental coefficient (in an environment where the player character is conspicuous, the range of vision is broadened even in the case of enemies having a low level of alertness, or the like).

The present invention can be applied to a game machine.

**Claims**

1. An image processing method for a game in a game machine composed in a manner that, by means of a CPU executing a game program, a game is implemented by controlling the behavior and positions in a virtual space of a player character which moves in said virtual space on the basis of operating signals from operating means which is operated by a game player, and other enemy characters which move in said virtual space under the control of said CPU, images of said game being displayed on display means; comprising the steps of:

   1) determining the behavior of said player character and specifying a first coefficient relating to said behavior;
   2) determining the current position of said player character in the virtual space and specifying a second coefficient relating to the environment defined at that position;
   3) specifying the conspicuousness of said player character on the basis of said first and second coefficients; and
   4) judging whether or not said enemy character has detected said player character, on the basis of said conspicuousness.

2. The image processing method for a game according to claim 1, further comprising the steps of:

   5) specifying a third coefficient relating to said enemy character on the basis of a prescribed parameter set for said enemy character; and
   6) further specifying said conspicuousness by using said third coefficient, in the processing in said step 3).

3. The image processing method for a game according to claim 1 or 2, further comprising the steps of:

   7) specifying said third coefficient respectively for each of a plurality of enemy characters located in said virtual space;
   8) averaging the plurality of third coefficients specified respectively for said plurality of enemy characters; and
   9) further specifying said conspicuousness by using said averaged coefficient, in the processing in said step 3).

4. The image processing method for a game according to claims 1 to 3, further comprising the step of:

   10) changing the display mode of an indicator image displayed on said display means, on the basis of said conspicuousness.

5. The image processing method for a game according to claim 4, further comprising the step of:

   11) displaying a moving image of a character symbol corresponding to the behavior of said player character, as said indicator image, on the display means.

**6.** The image processing method for a game according to claims 1 to 5, further comprising the step of:

> 12) judging whether or not said player character has entered into a range of vision set for said enemy character, and implementing the processing in said step 4), if it is judged that the player character has entered into said range of vision.

**7.** The image processing method for a game according to claim 6, further comprising the steps of:

> 13) changing said third coefficient on the basis of the distance between said enemy character and said player character, if it is judged that said player character has entered into the range of vision set for said enemy character; and
> 14) further specifying said conspicuousness by using said coefficient, in the processing in said step 3).

**8.** The image processing method for a game according to claims 1 to 7, further comprising the step of:

> 15) changing an alertness level parameter set for said enemy character, if it is judged by the processing in said step 4) that said enemy character has detected said player character.

**9.** A program which causes a computer to execute the respective processing described in any one of claims 1 to 8.

**10.** A storage medium on which the program according to claim 9 is recorded.

**11.** An electronic game machine comprising: a memory in which a game program is stored; an operating terminal which is operated by a game player; and a data processing apparatus which executes data processing for electronic game play on the basis of operational data from the operating terminal and said game program, and which executes processing for outputting the processing result to display means; wherein the data processing apparatus executes said program in such a manner that an operated object which the user can operate by means of said operating terminal is caused to behave in an inconspicuous fashion with respect to a target object in said program; said electronic game machine further comprising:

> parameterization means which parameterizes a conspicuousness which corresponds to the degree of conspicuousness of said operated object with respect to said target object;
> video image creation means which creates a video image of said conspicuousness, separately from a main screen;
> changing means which changes the display mode of said video image on the basis of said parameter value; and
> display processing means which executes processing for displaying said video image on the display means.

**Amended claims under Art. 19.1 PCT**

**1.** An image processing method in a game machine composed in a manner that, by means of a CPU executing a game program, a game is implemented by controlling the behavior and positions in a virtual space of a player character which moves in said virtual space on the basis of operating signals from operating means which is operated by a game player, and other enemy characters which move in said virtual space under the control of said CPU, images of said game being displayed on display means; comprising the steps of:

> 1) determining the behavior of said player character and specifying a first coefficient relating to said behavior;
> 2) determining the current position of said player character in the virtual space and specifying a second coefficient relating to the environment defined at that position;
> 3) specifying the conspicuousness of said player character on the basis of said first and second coefficients;
> 4) creating an indicator image which has a character symbol for behavior corresponding to the movement of said player character, and in which the brightness of the background color of said character symbol changes continuously in accordance with said conspicuousness, separately from said main screen;
> 5) displaying said indicator image created by said video image creation means on the display means; and
> 6) judging whether or not said enemy character has detected said player character, on the basis of said conspicuousness.

**2.** The image processing method for a game according to claim 1, further comprising the steps of:

7) specifying a third coefficient relating to said enemy character on the basis of a prescribed parameter set for said enemy character; and

8) further specifying said conspicuousness by using said third coefficient, in the processing of said step 3).

**3.** The image processing method for a game according to claim 1 or 2, further comprising the steps of:

9) specifying said third coefficient respectively for each of a plurality of enemy characters located in said virtual space;

10) averaging the plurality of third coefficients specified respectively for said plurality of enemy characters; and

11) further specifying said conspicuousness by using said averaged coefficient, in the processing in said step 3).

**4.** The image processing method for a game according to claims 1 to 3, further comprising the step of:

12) judging whether or not said player character has entered into a range of vision set for said enemy character, and implementing the processing in said step 6), if it is judged that the player character has entered into said range of vision.

**5.** The image processing method for a game according to claim 4, further comprising the steps of:

13) changing said third coefficient on the basis of the distance between said enemy character and said player character, if it is judged that said player character has entered into the range of vision set for said enemy character; and

14) further specifying said conspicuousness by using said third coefficient, in the processing of said step 3).

**6.** The image processing for a game according to claims 1 to 5, further comprising the step of:

15) changing an alertness level parameter set for said enemy character, if it is judged by the processing in said step 6) that said enemy character has detected said player character.

**7.** A program which causes a computer to execute the respective processing described in any one of claims 1 to 6.

**8.** A storage medium on which the program according to claim 7 is recorded.

**9.** A game machine composed in such a manner that, by means of a CPU executing a game program, a game is implemented by controlling the behavior and positions in a virtual space of a player character which moves in said virtual space on the basis of operating signals from operating means which is operated by a game player, and other enemy characters which move in said virtual space under the control of said CPU, images of said game being displayed on display means; comprising:

1) first coefficient specification means which determines the behavior of said player character and specifies a first coefficient relating to said behavior;

2) second coefficient specification means which determines the current position of said player character in the virtual space and specifies a second coefficient relating to the environment defined at that position;

3) conspicuousness specification means which specifies the conspicuousness of said player character on the basis of said first and second coefficients;

4) indicator image creation means which creates an indicator image which has a character symbol for behavior corresponding to the movement of said player character, and in which the brightness of the background color of said character symbol changes continuously in accordance with said conspicuousness, separately from said main screen;

5) display processing means which executes processing for displaying said indicator image created by said video image creation means on the display means; and

6) judgment means which judges whether or not said enemy character has detected said player character, on the basis of said conspicuousness.

**FIG.1**

EP 1 759 744 A1

**FIG.2**

(1)                                  (2)

~12

FIG.3

**FIG.4**

EP 1 759 744 A1

START

SPECIFY COEFFICIENT
RELATING TO BEHAVIOR
OF PLAYER CHARACTER ── S500

SPECIFY ENVIRONMENT
COEFFICIENT ── S502

SPECIFY ENEMY
CHARACTER-SIDE
COEFFICIENT ── S504

CALCULATE
CONSPICUOUSNESS ── S506

CREATE AND DISPLAY
INDICATOR ── S508

RETURN

FIG.5

13

(1)    (2)

(3)

FIG.6

<table>
<tr><td colspan="2">**INTERNATIONAL SEARCH REPORT**</td><td>International application No.<br>PCT/JP2005/004231</td></tr>
</table>

A.  CLASSIFICATION OF SUBJECT MATTER
    Int.Cl⁷  A63F13/00

According to International Patent Classification (IPC) or to both national classification and IPC

B.  FIELDS SEARCHED

Minimum documentation searched (classification system followed by classification symbols)
    Int.Cl⁷  A63F9/24, A63F13/00-13/12

Documentation searched other than minimum documentation to the extent that such documents are included in the fields searched
    Jitsuyo Shinan Koho       1922-1996   Toroku Jitsuyo Shinan Koho   1994-2005
    Kokai Jitsuyo Shinan Koho  1971-2005   Jitsuyo Shinan Toroku Koho   1996-2005

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | Shukan Fami Tsu, Enterbrain, Inc., Vol.19, No.14, 02 April, 2004 (02.04.04), pages 36 to 39 | 1-11 |

☐ Further documents are listed in the continuation of Box C.    ☐ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    24 March, 2005 (24.03.05) | Date of mailing of the international search report<br>    12 April, 2005 (12.04.05) |
|---|---|
| Name and mailing address of the ISA/<br>    Japanese Patent Office | Authorized officer |
| Facsimile No. | Telephone No. |

Form PCT/ISA/210 (second sheet) (January 2004)

**EP 1 759 744 A1**

## REFERENCES CITED IN THE DESCRIPTION

### Patent documents cited in the description

- JP 10263205 A
- JP 10263205 H